# EUROPÄISCHE PATENTSCHRIFT

(11) **EP 2 211 635 B1**
(45) Veröffentlichungstag und Bekanntmachung des Hinweises auf die Patenterteilung: **11.12.2013**
(21) Anmeldenummer: 07821860.9
(22) Anmeldetag: 25.10.2007
(51) Int. Cl.: A23L 1/00, A22C 7/00, A23L 1/31, A23L 1/325, A23P 1/10

(54) **VERFAHREN ZUR HERSTELLUNG GEFORMTER LEBENSMITTELPRODUKTE**
METHOD FOR PRODUCING SHAPED FOOD PRODUCTS
PROCÉDÉ DE PRODUCTION DE PRODUITS ALIMENTAIRES FAÇONNÉS

(43) Veröffentlichungstag der Anmeldung: 04.08.2010
(73) Patentinhaber: Nienstedt GmbH, 45721 Haltern (DE)
(72) Erfinder: GRONEBERG-NIENSTEDT, Petra, 45721 Haltern am See (DE)
(74) Vertreter: Bungartz, Klaus Peter
(86) Internationale Anmeldenummer: PCT/EP2007/061497
(87) Internationale Veröffentlichungsnummer: WO 2009/052865

(56) Entgegenhaltungen:
- EP-A- 1 595 456
- WO-A-2007/085773
- DE-A1- 2 235 517
- DE-A1- 10 220 006
- DE-A1- 19 806 391
- GB-A- 2 280 869

## Beschreibung

Die Erfindung betrifft ein Verfahren zur Herstellung geformter Lebensmittelprodukte bei dem aus einem oder mehreren, insbesondere fleisch-, fisch-, wild-, -geflügel, kohlehydrat- und/oder gemüsehaltigen Lebensmitteln oder einer Kombination und/oder einem hieraus zusammengefassten Gemisch ein gefrorenes Vorprodukt hergestellt wird, und das Vorprodukt im Rahmen der Verarbeitung innerhalb in einer Verarbeitungslinie über zumindest einen Formvorgang zu dem Lebensmittelprodukt mit gewünschter Kontur geformt wird, wobei innerhalb des Formvorgangs wenigstens ein Druckstempel das Vorprodukt zur Herstellung der Kontur gegen ein ebenes oder konturiertes Widerlager presst.

Ein Verfahren zur Herstellung geformter Lebensmittelprodukte dieser Art ist aus der WO 2007/085773 A1 bekannt. Bei diesem Verfahren werden als Vorprodukt ganze Stücke gewachsenen Muskelfleisches verwendet, die in ein Formnest eingegeben und über einen Druckstempel auf eine durch das Formnest vorgegebene Geometrie umgeformt werden. In Abhängigkeit der Höhe und der Breiten des Vorproduktes muss hierbei eine mehr oder weniger große Umformung vorgenommen werden. Das so geformte Fleischstück wird dann aus dem Formnest entnommen und kann dann der weiteren Verarbeitung, insbesondere einem Gar- oder einem sonstigen Zubereitungsprozess zugeführt werden. Ähnliche Fleischformmaschinen sind aus der EP 1 156 720 B1, der DE 198 06 391 A1 und der DE 102 20 006A1 bekannt. Auch hier wird über einen Druckstempel das Fleisch über einen Pressvorgang in eine gewünschte Form gepresst.

Obwohl mit den oben genannten Verfahren Fleischprodukte mit einer gewünschten Form hergestellt werden können, besteht durch die Umformung des Fleisches doch die Gefahr, dass dieses Fleisch in seiner Struktur trotz einer möglichst schonenden Bearbeitung so weit verändert wird, dass sich das so erzeugte Fleischstück insbesondere hinsichtlich seines optischen Erscheinungsbildes, der Zartheit und des Bissgefühls für den Verzehrenden von einem natürlichen Fleischstück unterscheidet.

Darüber hinaus besteht bei großen Verformungswegen immer die Gefahr, dass ungewollt Risse in der Zellstruktur des Fleisches auftreten, die dann den Eindruck eines zusammenhängenden Fleischstückes aufheben können oder bei dem späteren Garprozess dazu führen können, dass das Fleisch längs dieser Risse zerfällt, dass Verfärbungen an diesen Stellen auftreten, andere Zutaten in diese Bereiche verstörter Zellstruktur eintreten oder dass das Produkt zumindest faserig wirkt.

Aufgabe der Erfindung ist es daher, das eingangs genannte Verfahren derart zu modifizieren, dass das Vorprodukt schonender umgeformt werden kann, so dass sich zum einen die Anwendbarkeit des Verfahrens auf andere Arten von Vorprodukten erweitern lässt, und dass zum anderen das Vorprodukt möglichst wenig durch den Umformprozess beeinträchtigt wird.

Diese Aufgabe wird nach der Erfindung dadurch gelöst, dass der Druckstempel die Druckkraft in zumindest zwei, über einen Zwischenschritt oder eine Pause zeitlich voneinander getrennten Teilpressschritten aufbringt, wobei in einem ersten Teilpressschritt das Vorprodukt vorgeformt und in einem zweiten Teilpressschritt das Vorprodukt durch Erhöhung des Pressdruckes und bzw. oder durch weiteres Anstellen des Druckstempels in Richtung des Widerlagers weiter geformt wird.

Durch das erfindungsgemäße Verfahren wird das Umformen, in der Fachwelt auch mit dem Fachbegriff "shapen" bezeichnet, nun in einzelnen Schritten bzw. getacket durchgeführt. Dabei werden zwei oder mehr Teilpressschritte hintereinander durchgeführt, wobei hinter den Teilpressschritten jeweils ein Zwischenschritt vorgesehen ist. Dieser Zwischenschritt kann aus einer reinen Pause bestehen, bei der der Druckstempel in seiner aktuellen Position ohne Rückziehen oder Reduktion verharrt.

Es ist aber auch möglich, dass der Zwischenschritt entweder ein Rückziehen des Stempels bis hin zum Kontaktverlust zum Vorprodukt beinhaltet oder auch innerhalb des Zwischenschrittes weitere Verfahrensschritte angewendet werden. So wäre es beispielsweise bei entsprechender Ausgestaltung der Formvorrichtung möglich, dass innerhalb des Zwischenschrittes der Druckstempel zwar nicht weiter abgesenkt wird, aber kontinuierlich seinen Druck auf das Vorprodukt beibehält und durch eine Relativbewegung zwischen Widerlagers und Vorprodukt oder zwischen Druckstempel und Vorprodukt in zur Pressrichtung rechtwinklig angeordnete Massagerichtungen für eine Entspannung der vorgeformten Teile des Vorproduktes gesorgt wird.

Als Vorprodukte können erfindungsgemäß alle Arten von Lebensmitteln, auch für Tieremährung, verwendet werden. So ist die Erfindung nicht nur auf die Verarbeitung von Fisch, Geflügel oder Fleisch, einschließlich der Innereien der genannten Fleisch- bzw. Fischprodukte und einschließlich eventueller, fertig- oder teilweise vorgegarter bzw. zubereiteter oder sonst wie bereits teilverarbeiteter Produkte beschränkt, es können auch alle anderen Lebensmittel und Rezepturen von Lebensmitteln, beispielsweise Gemüse, Brot- oder Teigwaren oder ähnliches verwendet werden.

Wesentliches Merkmal des bevorzugten Formverfahrens ist die Tatsache, dass das Vorprodukt entweder als Naturprodukt oder als vorverarbeitetes Produkt zunächst tiefgefroren wird, wobei hier eine Temperatur gewählt wird, die dafür Sorge trägt, dass trotz eines eventuellen Salzgehaltes das Vorprodukt auf eine Temperatur unterhalb seines Gefrierpunktes bzw. des Gefrierpunktes eventuell im Vorprodukt enthaltener Flüssigkeiten herunter gekühlt ist.

Eine beispielhafte Vorbereitung des Vorproduktes, bevor es dem erfindungsgemäßen Verfahren unterworfen wird, ist das Vorbereiten von Fleischstücken. Bei Verarbeitung von Fleischprodukten wird üblicherweise das Fleisch vor dem Formvorgang über das bekannte Verfahren des Tumbelns vorbereitet, bei dem Würzmarinaden in das Fleisch einmassiert werden. Über diesen Massageprozess wird die Zusammensetzung des natürlichen Fleisches durch das Hinzufügen der Würzmarinade geändert, so dass hier eine Verschiebung des Gefrierpunktes von dem Gefrierpunkt von Wasser in Richtung der tieferen Temperaturen auftreten wird. Dementsprechend wird das Vorprodukt entsprechend tiefer abgekühlt, so dass es in gefrorenen Zustand umgeformt werden kann.

Bei Gemüsemischungen, mit Gemüse gefüllten Fleisch- oder Teigwaren oder ähnlichem kann der Gefrierpunkt durch eingelagerte Rezepturbestandteile, wie etwa Würzsaucen, Senfanteile oder auch bestimmte Grundprodukte reduziert werden. Auch hier wird durch eine geeignete Temperatur bevorzugt sichergestellt, dass ein gefrorenes Vorprodukt verarbeitet wird.

Dieses gefrorene Vorprodukt hat gegenüber einem nicht gefrorenen Vorprodukt den Vorteil, dass es in Folge der Versprödung durch den Gefrierprozess und die mit dem Gefrierprozess einhergehenden Klebekräfte der Flüssigkeitskristalle nach dem Umformen wesentlich formstabiler bleibt.

Im einfachsten Fall kann die Erfindung nur ein Zusammendrücken der Vorprodukte ohne Verwendung eines speziellen, tiefbettartigen Formnestes bewirken. Ein solches Verfahren ist beispielsweise zur Herstellung von Vorformlingen denkbar, die später als Wiener Schnitzel weiter verarbeitet werden sollen. Da diese Schnitzel bekanntlich eine sehr dünne Fleischschicht aufweisen sollen, kann hier ein normales Fleischstück auf die gewünschte Dünne gepresst werden.

Eine alternative Ausgestaltung der Erfindung verwendet dagegen ein Formnest, in das das Vorprodukt eingedrückt wird. Hier kann durch eine gewählte Kontur ein Lebensmittelprodukt erzeugt werden, das entweder eine besonders lustige Form aufweist, um es beispielsweise für Kinder attraktiver zu machen, oder trotz einer ursprünglich andersartigen Form die Form eines natürlichen Lebensmittels besitzt. So ist es beispielsweise möglich, aus beliebig geformten Fleischabschnitten ein Lebensmittel zu erzeugen, das in seiner Form einem Steak oder einer Hamburger-Scheibe entspricht.

Neben der Verarbeitung von Fleisch kann das erfindungsgemäße Verfahren auch bei der Verarbeitung aller anderen Lebensmittel Verwendung finden. So ist es nicht nur möglich, dass beispielsweise Gemüseprodukte geformt werden, sondern es ist auch denkbar, dass Teigwaren auf diese Weise hergestellt werden oder dass insbesondere auch Kombinationen der genannten Waren als Vorprodukt Anwendung finden. Dabei kann die Verwendung gefrorener Vorprodukte nicht nur auf Grund der besseren Verarbeitbarkeit des gefrorenen Materials sinnvoll sein, auch die Verhinderung von Verunreinigungen, etwa bei ei- oder geflügelhaltigen Produkten durch Salmonellen, ist hier wesentlich verbessert.

Erfindungsgemäß wird nun das Verfahren des Umformens in den vorgeschlagenen Teilpressschritten durchgeführt, wobei eine einfache Ausgestaltung der Erfindung darin besteht, dass der Druckstempel getaktet auf das Vorprodukt abgesenkt wird und so in einer leicht hämmernden Bewegung nach und nach die gewünschte Umformung erzielt. Die Dauer der Teilpressschritte ist grundsätzlich beliebig einstellbar, als besonders vorteilhaft haben sich Teilpressschritte zwischen 0,1 Sekunden und 60 Sekunden, insbesondere zwischen 0,5 Sekunden und 2 Sekunden erwiesen. Letztlich wird aber die vorteilhafte Dauer eines Teilpressschrittes auch vom geforderten Verformungsgrad und natürlich von dem Material des eingelegten Vorproduktes abhängig sein.

Bei einer möglichen Prozessführung ist es möglich, dass während des Formvorganges die Verformungsgeschwindigkeit gemessen wird um auf unerwartete Zustände, insbesondere einen hohen Verformungsgrad reagieren zu können. Wird beispielsweise Fleisch mit unterschiedlichsten Geometrien, aber gleichem Gewicht in die Formvorrichtung gegeben, kann der Verformungsgrad, der zur Herstellung von einheitlichen Produkten erforderlich ist, sehr stark in Abhängigkeit der Grundform variieren. Hier kann es sinnvoll sein, bei hohen Verformungsgraden den betroffenen Teilpressschritt, der an sich länger angesetzt wäre, frühzeitig abzubrechen, um dem stark verformten Fleisch zur inneren Entspannung zunächst eine Zeitspanne der Ruhe zu gewähren oder dieses Fleisch über die eingangs genannten Massageschritte zu relaxieren.

Eine bevorzugte Ausgestaltung des erfindungsgemäßen Verfahrens verwendet nicht nur zwei, sondern eine Mehrzahl von Teilpressschritten, beispielsweise 10, 20 oder 30 Teilpressschritte. Diese Teilpressschritte können dabei eine einheitliche oder eine unterschiedliche zeitliche Dauer aufweisen. Insbesondere in Verbindung mit der Verformung von Fleisch hat es sich beispielsweise bei einer Anwendung als vorteilhaft erwiesen, dass mehr als 5, beispielsweise ungefähr 10-15 Teilpressschritte angewendet werden, die eine Länge von jeweils etwa einer Sekunde aufweisen. Dazwischen ist jeweils eine Pause, die ebenfalls eine Sekunde betragen kann, vorgesehen. Auf diese Wiese ergibt sich ein Effekt, der etwa einem kontinuierlichen, leichten Hämmern entspricht, wobei der Druckstempel mit jedem Teilpressschritt ein kleines Wegstück weiter in Richtung des Widerlagers verfahren wird.

Für jedes Material des Vorproduktes und des geforderten bzw. erwarteten Verformungsgrades kann es sinnvoll sein, die Teilpressschritte in ihrer Länge und dem anzuwendenden Druck unterschiedlich auszugestalten. So kann es zum Beispiel ratsam sein, die Teilpressschritte mit zunehmender Verformung zu verkürzen, was insbesondere bei Vorprodukten, die nur eine in Querrichtung kleine, aber in Druckrichtung hohe zu egalisierende Verdickung aufweisen, empfehlenswert sein kann. Hier kann die erste Grobverformung mit einem entsprechend großen Verfahrweg des Druckstempels durchgeführt werden, während die spätere, endgültige Formung dann mit kleineren Wegen, aber aufgrund der größeren Anlagefläche dann mit entsprechend größeren Mengen zu verformenden Fleisches einhergeht. In dem späteren Stadium kann es dann sinnvoll sein, die Verformungswege zum Beispiel durch Verkürzen der Dauer der Teilpressschritte zu verkleinern.

Je nach Gestalt des Vorproduktes kann aber gerade auch der gegenteilige Weg zur Lösung führen, dass nämlich die großen Verfahrwege in kleineren Etappen erfolgen, während die kleineren Verfahrwege mit ganzflächiger Anlage in einem Schritt durchgeführt werden können. Dies kann zum Beispiel dann ratsam sein, wenn das Vorprodukt aus einer Mischung unterschiedlichster Lebensmittel besteht und in der Mitte des Vorproduktes ein Gemisch oder Produkt hoch herausragt, das durch den Formvorgang so nach unten und langsam in die Breite gepresst werden soll, so dass es zum Beispiel in die untere Masse, etwa einem Teigprodukt, eingedrückt wird, aber nicht zuvor zerfällt.

Alternativ oder zusätzlich hierzu kann natürlich zu den späteren oder früheren Zeitpunkten statt mit dem reduzierten Umformweg auch mit einem reduzierten Umformdruck gearbeitet werden. Zum schonenden Bearbeiten des Vorproduktes kann der Druckstempel während der einzelnen Teilpressschritte auf unterschiedlichste Art mit dem Umformdruck beaufschlagt werden. Im einfachsten Fall wird ein "spontan formender Pressschritt" verwendet, bei dem die für den jeweiligen Teilpressschritt gewünschte Druckkraft spontan, das heißt ohne gewollte Verzögerung und in voller Höhe auf den Drucktempel übertragen wird. Führt dieser Druck nun zu einer gewissen Verformung des Vorproduktes, kann entweder durch diese Verformung der Druck nachlassen, da sich bei einer nur kurzzeitigen Einleitung des Arbeitsdruckes in den Arbeitskolben des Druckstempels durch die Bewegung des Druckstempels und die damit einhergehende Vergrößerung des Arbeitskolben auch das Drucksystem teilweise entspannt. Es kann der Arbeitsdruck aber auch unverändert aufrecht erhalten bleiben, so dass eine entsprechend schnellere Weiterverformung erfolgen kann.

Alternativ kann auch eine rein weggesteuerte Spontanverformung erfolgen, wobei dann bei diesem Teilpressschritt unabhängig von der Reaktion des Vorproduktes die Verformung längs eines vorbestimmten, insbesondere gradlinigen Wegverlaufes des Druckstempels vorgenommen werden kann. Die unterschiedlichsten Teilpressschritte lassen sich je nach Wunsch oder Erfahrung mit der Verarbeitung beliebig miteinander kombinieren.

Zwischen den Teilpressschritten können unterschiedliche Zwischenphasen vorgesehen werden. In den meisten Fällen wird es ausreichend sein, dem teilweise umgeformten Vorprodukt eine Pause einzuräumen, während derer sich die Strukturen des Vorproduktes von dem Umformdruck erholen können oder auch aufgebrochene Frostbindungen durch erneutes aneinander Festfrieren wieder geschlossen werden. Letzteres wird insbesondere beim Umformen von losen Gebinden, wie beispielsweise Pasta- oder Reisprodukten, die nur über die Frostbindung der einzelnen Bestandteile aneinander gebunden sind, empfehlenswert sein. Hier kann sogar durch Zugabe von wässrigen Dämpfen oder ähnliche Maßnahmen eine erneute Bindung erzeugt werden.

In anderen Fällen kann es dagegen durchaus sinnvoll sein, die Erholung des Vorproduktes dadurch zu verstärken, dass das Vorprodukt einer Massage unterworfen wird. So kann der Druckstempel zum Beispiel kreisende oder translatorische Bewegungen in der zur Pressrichtung rechtwinkligen Ebene ausführen. In diesem Fall sollte er natürlich weiterhin in Anlage an die Oberfläche des teilweise umgeformten Vorproduktes gehalten werden, so dass sich eine leicht rollende oder knetende Belastung des Fleisches mit Phasen der seitlichen Verdrängung oder der Entspannung ergibt. Dies kann über eine Taumelbewegung des Druckstempels, der hierzu gegenüber dem Druckstempel des Teilpressschrittes auch ausgetauscht werden kann, verstärkt werden. Auch eine Ultraschallerregung des Druckstempels ist zur Beruhigung des Vorproduktes möglich.

Schließlich kann natürlich auch eine kinematische Umkehr der oben genannten Maßnahmen erfolgen, so dass dann das Widerlager die entsprechenden Bewegungen ausführt und der Druckstempel in Ruhe verbleibt. Auch eine Kombination von bewegtem Druckstempel und bewegtem Widerlager ist natürlich zur Einwirkung auf beide Seiten des Vorproduktes möglich.

Schließlich ist es möglich, dass zur Vereinfachung des Umformprozesses das Vorprodukt bereits vor dem Einbringen in das Formnest bzw. der Auflage auf das Widerlager mit einer die Umformung erleichternden Flüssigkeit oder sonstigen Substanzen behandelt wird. So kann beispielsweise in ein Fleischprodukt eine ölhaltige Marinade eingetumbelt werden oder es kann dieses Fleischprodukt derart getumbelt werden, dass die Eiweißkonzentration innerhalb der Zellstruktur auf eine die Umformung begünstigende Weise verschoben wird.

Während der Ruhephasen kann der Druckstempel auch um einen definierten Weg zurückgezogen werden. Unter definiertem Weg ist hierbei einerseits das Zurückfahren um eine bestimmte Wegstrecke zu verstehen, andererseits soll hierunter aber auch verstanden werden, dass der Druckstempel einem bestimmten Gegendruck wieder nachzugeben vermag, sich also druckabhängig zurüdcstellt. Letzteres ist insbesondere dann sinnvoll, wenn, wie oben beschrieben, durch eine Bewegung des Druckstempels eine Massagefunktion des Vorproduktes umgesetzt werden soll.

Auch eine ungewollte Rückstellung der Teilverformung durch einen Memory-Effekt kann auf diese Weise eingeschränkt oder unterbunden werden, da bei der druckabhängigen Rückstellung auch während der Beruhigungsphase eine gewisse Formwirkung des Druckstempels erhalten bleibt. Auf diese Weise kann auch während der Beruhigungsphase und des Abbaus der Spannungen innerhalb der einzelnen Schichten des Vorproduktes eine weitere Verformung, etwa durch Fließen des unter Spannung stehenden Materials erfolgen.

Grundsätzlich ist das Zurückziehen des Druckstempels bzw. das Nachgeben des Druckes auf alle möglichen Weisen denkbar und kann in einem einfachen Fall durch einfaches Rückziehen des Druckstempels um einen bestimmten Weg erfolgen. Alternativ kann auch einfach der Anstelldruck teilweise oder bis auf Umgebungsdruck reduziert werden. Es ist ferner auch möglich, das Zurückziehen des Druckstempels langsamer, längs einer gradlinigen, progressiven oder auch degressiven Wegund/oder Druckverlaufskurve vorzunehmen.

Eine weitere Ausgestaltung des erfindungsgemäßen Verfahrens weist Teilpressschritte auf, die sich aus einer weggesteuerten und einer druckgesteuerten Formphase zusammensetzen. Innerhalb der weggesteuerten Formphase wird der Druckstempel um einen vorbestimmten Weg unabhängig von dem Druckverhältnissen gegen das Widerlager angestellt. Während der druckgesteuerten Phase kann dagegen auf den Gegendruck des Vorproduktes reagiert werden, so dass hier ein bestimmter Maximaldruck, der in Abhängigkeit von der Belastbarkeit des Vorproduktes festgelegt wird, nicht überschritten wird. Dieses Verfahren hat insbesondere der Vorteil, dass eine Beschädigung des Vorproduktes noch besser vermieden werden kann.

Eine mögliche Anwendung dieser zweiphasigen Teilpressschritte besteht beispielsweise darin, dass zunächst ein erster Weg, der hinsichtlich der Beschädigung der Strukturen unkritisch ist, weggesteuert durchfahren wird, während der hinsichtlich der Beschädigung weitaus kritischere zweite Weg dann druckgesteuert zurückgelegt werden kann. Andere Anwendungen tragen der Entlastung des zum Beispiel fleischartigen Vorproduktes während der druckgesteuerten Formphase Rechnung, so dass trotz des zunehmenden Druckes durch die zeitliche Abwechslung von weggesteuerter und druckgesteuerter Formphase innerhalb eines Teilpressschrittes bei unbeschädigter Struktur ein maximales Verformungsergebnis erzielt werden kann.

Grundsätzlich sind alle Kombinationen von hintereinander angeordneten, weg- oder druckgesteuerten Phasen, auch in mehrfacher Wiederholung, innerhalb eines einzelnen Teilpressschrittes möglich. Schließlich ist es auch möglich, dass Teilpressschritte als kontinuierlich formende Teilpressschritte ausgebildet werden, wobei hierbei der Pressschritt längs einer im Vorfeld vorgegebenen Belastungskurve unabhängig von der Reaktion des unter Druck befindlichen Vorproduktes durchgeführt wird. Diese Umformung kann durch Erreichen eines maximalen Pressdruckes oder Erreichen eines maximalen Umformweges beendet werden.

Der vorgegebene Belastungsverlauf kann linear, progressiv oder degressiv ausgebildet sein. Ferner kann sich eine Phase der Entlastung, während derer der Druck wieder leicht reduziert wird, oder auch eine kontinuierliche Belastungsphase, während derer der Druck konstant gehalten wird, anschließend. Die zweite Phase kann auch durch einen ortsfesten Druckstempel charakterisiert sein, so dass hier unabhängig vom Formdruck nach Durchlaufen der ersten, druckerhöhenden Phase eine Phase mit konstanter Stempelposition vorgesehen ist.

Das erfindungsgemäße Verfahren setzt sich also aus beliebigen Kombinationen von Teilpressschritten dieser Art, einfachen Teilpressschritten ohne Wechsel zwischen Druck- und Wegsteuerung und unterschiedlichsten Pausenschritten mit oder ohne Einwirkung auf das Material zusammen.

Eine weitere Ausgestaltung des erfindungsgemäßen Verfahrens betrifft die besondere Ausbildung des Druckstempels bzw. des Widerlagers. Je nach Vorprodukt kann es möglich sein, dass lokal sehr hohe Belastungen und sehr hohe Umformwege auftreten, während andere Bereiche des Formnestes bzw. des Vorproduktes weniger stark bis gar nicht belastet oder umgeformt werden. Oft wird es sehr schwierig sein, hier allen Gegebenheiten im Vorfeld Rechnung zu tragen, da beispielsweise häufig unterschiedliche Formen von Vorprodukten geformt werden sollen. So kann beispielsweise im Rahmen einer Fleischproduktion durchaus ein dünnes, flaches Vorprodukt ebenso zur Verarbeitung anstehen, wie ein würfelförmiges oder auch ein stehendes, schmales hohes Fleischstück.

Es ist offensichtlich, dass die Belastungen auf den Druckstempel, das Widerlager und natürlich das Vorprodukt in den oben genannten Fällen völlig unterschiedlich sind. Diesen Umständen kann ein Druckstempel Rechnung tragen, der elastisch ausgebildet ist, so dass der Druckstempel Spitzenbelastungen zunächst dadurch ausweichen kann, dass sich die Stempelfläche belastungsabhängig verformt. Durch die elastischen Rückstellkräfte wird dann im Verlauf des weiteren Hubes dies wieder rückgängig gemacht, so dass die gewünschte homogene Verformung des Vorproduktes erfolgen kann.

Bei einer weiteren besonderen Ausgestaltung des Druckstempels ist es auch möglich, diesen während eines oder mehrerer Teilschritte elastisch auszubilden, während er während der späteren Teilschritte versteift wird, so dass er eine ebene, nicht auswandernde Druckfläche aufweist. Hierzu kann beispielsweise der Druckstempel eine untere Druckplatte aufweisen, die über Federn über den eigentlichen Stempelkörper verbunden ist. Diese Federn bewirken eine Elastizität des Druckstempels während der ersten Teilschritte, so dass die Bereiche stärkerer Belastung einer geringeren Verformung unterliegen. Weist dieser Druckstempel nun Versteifungsbolzen auf, die ausgehend vom Druckstempel gegen die untere Druckplatte mechanisch, hydraulisch oder pneumatisch verfahrbar sind, kann die Federwirkung aufgehoben werden, so dass der Druckstempel dann über eine ebene, nicht mehr federnde Druckplatte verfügt. Diese Bolzen können auch schon vor Beginn eines der Teilpressschritte verfahren werden, so dass der Druckstempel während dieses Teilpressschrittes ein federtechnisch einheitliches, während eines anderen Teilpressschrittes dagegen ein Verhalten unter Einbezug der Feder zeigt.

Alternativ können diese Bolzen aber auch während der Durchführung des Teilpressschrittes zur Anwendung kommen, so dass zum Beispiel zusätzlich zu der eigentlichen Druckkraft in denjenigen Bereichen, in denen die Druckplatte ausgewandert ist, durch die Druckkraft der Bolzen das Auswandern wieder rückgängig gemacht werden kann, so dass hier bei konstant gehaltenem Weg oder Druck des eigentlichen Druckstempels eine zusätzliche Presskraft auf die Bereiche erhöhten Gegendruckes ausgeübt werden kann. Auch dieser Gegendruck kann spontan oder druck- bzw. wegabhängig aufgebaut werden.

Soll über eine federnde Kontaktkraft zwischen Druckstempel, dem Widerlager und dem zwischen diesen beiden Konstruktionsteilen angeordneten Vorprodukt ein Auswandern der Pressflächen wie oben beschrieben ermöglicht oder verhindert werden, kann dies natürlich auch auf Seiten des Widerlagers erfolgen. Dies ist besonders bevorzugt, wenn als Widerlager ein Werkstückträger mit einem oder mehreren Formnestem verwendet wird. In diesem Fall kann das Formnest federnd auf dem Werkstückträger angeordnet sein. Ein solchermaßen federnd gelagertes Formnest kann entweder durch den Druckstempel bis zum Anschlag der Feder heruntergedrückt werden, so dass die Federwirkung aufgehoben ist. Alternativ kann aber auch eine besondere Vorrichtung vorgesehen sein, die die Federwirkung aufhebt.

Diese kann entweder darin bestehen, dass der Druckstempel einen relativ zum inneren Bereich separat ansteuerbaren und verfahrbaren äußeren Bereich aufweist, der die Ränder außerhalb des Formnestes auf einen Rahmen drückt, so dass das Formnest auf dem tragenden Rand festgelegt ist. Dann kann der das Formnest ausfüllende, innere Druckstempel in das Formnest zum Verformen des Vorproduktes gefahren werden. Alternativ kann auch der Werkstückträger selbst die oben bereits beschriebenen Bolzen aufweisen, die von dem Wergstückträger aus gegen den Rahmen des Formnestes verfahrbar sind, so dass dieser in Pressrichtung festgelegt ist.

Eine weitere Ausgestaltung der Erfindung kann ein Formnest verwenden, das über hydraulische oder pneumatische Lager gehalten ist, die selektiv dergestalt angesteuert werden können, dass sie eine der Presskraft entgegen gerichtete Druckkraft aufzubringen vermögen. So kann beispielsweise eine Dreipunkt- oder Vierpunktlagerung vorgesehen sein, die einen Rahmen, an dem wiederum das Formnest befestigt ist, hält. An jedem der Lagerpunkte kann dann ein hydraulisches oder pneumatisches Stellglied vorgesehen sein, das das Formnest dem Stempel entgegen zudrücken vermag. Treten nun im Bereich des Formnestes Spitzenbelastungen auf, würde sich das federnd gelagerte Formnest schief stellen. Um genau dies zu vermieden, bzw. sogar eine gegensinnige Schiefstellung erzeugen zu können, kann nun über die hydraulischen oder pneumatischen Lager das Formnest so ausgerichtet werden, dass die Pressdrücke in den Bereichen mit der größeren Materialansammlung erhöht werden und damit Teile des Vorprodukts zum Erlangen einer homogeneren Materialverteilung in den Bereich geringerer Pressdrücke gedrückt werden.

Während der Teüpressschritte kann das Vorprodukt unterschiedlichen Belastungen durch konstant bewegten oder beschleunigt bzw. verzögert bewegten Druckstempel ausgesetzt sein. Die gesamte Bewegung des Druckstempels, insbesondere während der Phase der Beschleunigung oder der Verzögerung, kann vorgegeben oder auch druckabhängig erfolgen. Welche Kombination für das Vorprodukt am vorteilhaftesten ist, ergibt sich jeweils aus der Konsistenz des Vorproduktes und wird bevorzugt über Versuche ermittelt.

Während des Verfahrens kann über eine Druckmessung das Verhalten des Vorproduktes und dessen Belastung ermittelt werden. Die Druckbelastung kann anhand der Belastung des zentralen Druckstempels bestimmt werden, es sind aber auch Drucksensoren möglich, die punktuell über die gesamte Druckfläche verteilt oder flächig die Belastung ermitteln. Letzteres kann beispielsweise durch die Verwendung einer piezoelektrischen Sensorfolie erfolgen, über die der gesamte Bereich der Druckfläche überwachbar ist. Wird nun ein kritischer Druck festgestellt, kann bei Beibehaltung der jeweils anderen Prozessgrößen entweder der Druck reduziert, die Expositionsdauer des Druckes reduziert oder auch die Verfahrgeschwindigkeit des Druckstempels herabgesetzt werden. Unterhalb des kritischen Druckes kann entweder mit konstanter Druckkraft oder mit konstanter Verfahrgeschwindigkeit verformt werden.

Eine bevorzugte Verarbeitungsvorrichtung für Lebensmittelprodukte weist zumindest eine der beschriebenen Formvorrichtung auf. Innerhalb dieser Formvorrichtung kann ein Widerlager angeordnet sein. Sofern eine spezielle Kontur erzielt werden soll, kann es sich hierbei um ein Formnest handeln. Bevorzugt wird jedoch pro Formeinrichtung eine Mehrzahl von Formnester vorgesehen sein, so dass sich mit einem Formvorgang der Formvorrichtung mehrere Lebensmittelprodukte herstellen lassen. Eine Bestückungsvorrichtung kann die Vielzahl von Formnestern vor dem Anwenden des Verfahrensdruckes mit Vorprodukten bestücken, alternativ kann auch ein Werkstückträger eingesetzt werden, der die Formnester aufweist und bereits bestückt in die Formvorrichtung eingesetzt wird. Letzteres ist insbesondere bei Verwendung einer ganzen Verarbeitungslinie interessant.

Eine solche Verarbeitungslinie kann dann auch eine Vorverarbeitung aufweisen, wenn beispielsweise die Vorprodukte zunächst zu einem Block von Lebensmittelprodukten zusammengefasst werden, der anschließend über eine Zerteilungsvorrichtung, insbesondere eine Bandsäge, in die einzelnen Vorprodukte portionsweise zerlegt wird. Dieser Block kann beispielsweise aus gefrorenem Muskelfleisch bestehen, wobei zunächst die Fleischstücke in nicht gefrorenem Zustand getumbelt oder auf sonstige Weise vorbereitet und anschließend zu dem Block, der dann gefroren wird, zusammengefasst werden können.

Nachdem die solchermaßen vorbereiteten Vorprodukte in die Formnester eingelegt sind oder auf das Widerlager aufgelegt sind, kann dann über die Formeinrichtung die Verformung nach den oben beschriebenen Verfahrensmöglichkeiten erfolgen. Im einfachsten Fall wird hierbei eine einzelne Formvorrichtung verwendet.

Der Druckstempel kann bei einer vorteilhaften Weiterbildung der Erfindung auch konturiert sein, also eine nicht ebene Oberfläche aufweisen. Hiermit lassen sich in einer Anwendung Produkte herstellen, die auch an der Oberfläche konturiert sein sollen.

Alternativ kann ein konturierter Druckstempel, der zum Beispiel eine außermittige, dem Vorprodukt entgegenspringende Erhebung oder eine Vielzahl von ballig ausgebildeten Bereichen aufweisen kann, auch zur vorbereitenden Formgebung innerhalb der Umformvorrichtung genutzt werden. Damit hier die jeweils tiefst gelegenen Stellen des Druckstempels auf alle Bereiche des Vorproduktes wirken können, kann der Druckstempel während der Teilpressschritte gedreht werden, bevorzugt um einen Winkel, der sich aus der Gesamtanzahl der Teilpressschritte dergestalt ergibt, dass das nach Durchlaufen aller Teilpressschritte der Druckstempel um 360° gedreht ist. Bei 6 vorgesehenen Teilpressschritten würde also eine Drehung um jeweils 60° erfolgen, so dass nahezu jeder Bereich des Vorproduktes mit jedem Bereich des Druckstempels in Kontakt gekommen ist.

Der oben beschriebene drehbare Druckstempel kann gegen den endgültigen Formstempel durch einen manuellen oder automatischen Werkzeugwechsel ausgetauscht werden oder er wird in einer ersten Formvorrichtung eingesetzt, wobei das Formnest zusammen mit den hierin vorbehandelten Vorprodukten nach der Vorbehandlung und der damit einhergegangenen Vorformung einer zweiten Formvorrichtung zugeführt wird, die dann mit dem endgültigen Formstempel die letzte Umformung vornimmt. Bei dieser zweistufigen Verformung können insbesondere durch die weg- und/oder druckgesteuerte Anstellung der Druckstempel unterschiedlichste Vorprodukte, insbesondere flache Vorprodukte einerseits und sehr hohe Vorprodukte andererseits auf die gleiche Kontur geformt werden, ohne dass durch zu schnelle Umformgeschwindigkeiten die Fleischstruktur oder die Struktur des sonstigen Lebensmittels zu stark in Mitleidenschaft gezogen werden würde.

Werden mehrere Formstationen verwendet, kann auch über die Größe des Druckstempels eine Maximalbelastung zunächst reduziert werden. So kann in der ersten Formstation der Druckstempel so klein ausgebildet sein, dass er nur einen Teil des Formnestes abdeckt. Dies ermöglicht dem Vorprodukt in dieser frühen Verformungsphase dem Druckstempel teilweise auszuweichen. Dieses Ausweichen verhindert dann wiederum zu starke Verformungsgrade. Ist hier der Druckstempel nicht drehbar gelagert und nicht konzentrisch zur Drehachse angeordnet, kann auch hier über mehrere Teilpressschritte der Pressdruck auf verschiedene Regionen des Widerlagers bzw. des Formnestes ausgeübt werden. Um bei dieser Ausgestaltung dann die gewünschte einheitliche Kontur zu erzielen, kann das Formnest bzw. das Widerlager dann einer zweiten Formstation zugeführt werden, wo ein größerer, das gesamte Formnest bzw. die gesamte Fläche des Vorproduktes abdeckender Druckstempel dann die endgültige Verformung mit einem oder mehreren Teilprozessschritten vornehmen kann.

Die zwischen den Teilpressschritten vorgesehenen Entspannungsphasen können genau so lang wie die Teilpressphasen sein, bei Bedarf ist es jedoch auch möglich, die Länge der Entspannungsphasen zu vergrößern oder auch zu verringern. Während der Entspannung kann das Vorprodukt völlig drucklos gestellt werden, alternativ kann auch ein bestimmter Teildruck aufrecht erhalten bleiben. Die bereits beschriebene Massage des teilverformten Vorproduktes kann während der Teilpressschritte und bzw. oder während der Entspannungsphasen durch Vibrationen bzw. kurzwellige, auch im Ultraschallbereich liegende Auf- und Abbewegungen des Druckstempels oder des Widerlagers erfolgen.

Schließlich ist es möglich, den Verformungsgraden und dem Druckverlauf während der vorhergehenden Verformung innerhalb des Teilpressschrittes dadurch Rechnung zu tragen, dass bei sehr ungünstigen Drücken bzw. Verformungsgraden entweder die Entspannungsphase oder zumindest einer der Teilpressschritte verlängert wird. Hierzu kann über Drucksensoren während des Verfahrweges des Druckstempels innerhalb der Teilpressphase ermittelt werden, ob der Druckstempel über einen längeren Wegbereich einem Gegendruck ausgesetzt ist. Hieraus ergibt sich die Tatsache, dass offensichtlich das Vorprodukt in Druckrichtung in erheblichem Maße umgeformt worden sein muss. Eine solche starke Umformung resultiert dann in einer längeren Entspannungsphase.

Ist dagegen der Druckstempel ohne Gegendruck über den gleichen Verfahrweg verfahren worden, kann hieraus geschlossen werden, dass das Vorprodukt entsprechend flach gewesen sein muss, so dass sich trotz des langen Verfahrweges keine zu große Umformung aufgetreten sein kann. Dies resultiert dann wiederum zur Optimierung der Prozessdauer in einer kürzeren Entspannungsphase.

Das Vorprodukt weist während der Verformung bevorzugt eine tiefe Temperatur auf. Üblicherweise wird das Formen derzeit bei einer Temperatur von minus 15° durchgeführt. Um die Fließfähigkeit des Materials zu verbessern, kann diese Temperatur bis kurz unterhalb des Gefrierpunktes angehoben werden. Da die meisten Vorprodukte salzhaltige Substanzen enthalten, beträgt in diesem Fall die Temperatur beispielsweise minus 5°. Sind keine salzhaltigen Substanzen anwesend, kann natürlich eine höhere Temperatur, etwa knapp unterhalb des Gefrierpunktes von Wasser (=0°Celsius) gewählt werden. Die höheren Temperaturen führen dazu, dass die Verformung schonender durchgeführt werden kann. Auf diese Weise kann zusätzlich vermieden werden, dass die Zellstrukturen zerstört werden.

Das erfindungsgemäße Verfahren kann entweder Verwendung finden, um ein Vorprodukt auf eine gewünschte, vorbestimmte Höhe zu formen. Dies wird immer dann der Fall sein, wenn beispielsweise Hamburger-Scheiben oder Fleischstücke, die in ihrer Form bevorzugt einem Schnitzel oder einem Rumpsteak entsprechen, hergestellt werden sollen. Bei dieser Verformung muss der Druck so lange ausgeübt werden, bis die gewünschte Höhe erreicht ist. Damit dies möglich ist, muss natürlich zuvor dafür Sorge getragen werden, dass nicht zu viel Fleisch in das Formnest eingebracht wird, sofern dies eine äußere Randbegrenzung aufweist.

Soll dagegen keine bestimmte Höhe erzielt werden, kann auch das Erreichen eines Maximaldruckes das Ende des Formvorganges bedeuten. In diesem Fall wird das Fleisch mit einem maximal zulässigen Druck umgeformt, wobei die Höhe des fertigen Produktes dann von untergeordneter Bedeutung ist. Dies ist insbesondere dann vorteilhaft, wenn es auf die Höhe des herzustellenden Lebensmittelproduktes im Wesentlichen nicht ankommt und aufgrund der eingelieferten Vorprodukte die Höhendifferenzen trotz der reinen druckgesteuerten Prozessführung nicht zu groß sind, so dass dennoch im Wesentlichen einheitliche Produkte für die Lebensmittelindustrie hergestellt werden können.

Ferner betrifft die Erfindung alle Verfahren, die eine Verformung von insbesondere tiefgefrorenen Vorprodukten beinhalten, unabhängig davon, ob diese Verfahren ausschließlich auf die reine Verformung beschränkt sind oder ob Verarbeitungsschritte vor- oder nachgeschaltet sind. Insbesondere können beliebig zusammengestellte, teilweise oder vollständig vorgegarte oder endgültig gegarte Produkte in das Verfahren eingeführt werden. Die verformten Lebensmittelprodukte können anschließend verzehrfertig sein, weiterer Verarbeitung und Zubereitung bedürfen oder auf sonstige Weise einer lebensmitteltechnischen Behandlung oder Modifikation unterworfen werden.

Die zur Durchführung des Verfahrens benötigte Vorrichtung ist im einfachsten Fall mit nur einer Formeinrichtung versehen, die die Druckkraft getaktet bzw. mit den einzelnen, durch Entspannungsphasen voneinander getrennten Teilpressschritten auf das Vorprodukt aufbringen kann. Optional kann diese Formvorrichtung mit einer Drucksteuerung versehen sein, die den aufgebrachten Verfahrensdruck entweder gemäß einer vordefinierten Druckverlaufskurve variieren kann oder die eine Sensorik aufweist, so dass der Gegendruck, der auf Grund des Pressdruckes von dem Vorprodukt auf den Druckstempel übertragen wird, ermitteln kann. Alternativ kann natürlich auch der Druck auf das Widerlager aufgenommen werden. Auch eine optische Aufnahme des Umformerfolges, auch aus mehreren Blickrichtungen kann als Regelgröße herangezogen werden.

In Abhängigkeit des Gegendruckes oder der Umformgrade kann dann selektiv der Prozessdruck für den Druckstempel erhöht oder verringert werden, so dass die Verfahrensschritte, wie sie oben beschrieben sind, durchführbar sind.

Eine weitere Ausgestaltung der Verarbeitungslinie weist eine zweite Formeinrichtung und eine Zuführvorrichtung auf, über die die Formeinrichtung bzw. die Formeinrichtungen mit den Vorprodukten beschickbar sind. Hierzu kann das Vorprodukt zunächst aus einem größeren Verbund, etwa den oben beschriebenen tiefgefrorenen Blöcken durch Zerteilen in einzelne Portionen hergestellt werden. Diese Portionen können dann über die Zuführvorrichtung automatisch auf die Widerlager verteilt bzw. in die Formnester eingelegt werden.

Sofern eine Formeinrichtung mehrere Formnester bedienen kann, kann dies entweder über einem gemeinsamen Stempel geschehen, der an seiner Unterseite so ausgebildet sein kann, dass er mit einzelnen Druckplatten in jedes Formnest einzudringen vermag. Es können aber auch mehrere Druckstempel vorgesehen sein, so dass jeder Stempel für sich die oben beschriebenen Verfahrensschritte, insbesondere die Druckreaktionen möglich macht. Letzteres ist natürlich dann besonders bevorzugt, wenn in jedem Formnest unterschiedliche Geometrien des Vorproduktes angeordnet sein können. Wird dagegen das Vorprodukt aus Blöcken ausgesägt, wird jedes Vorprodukt in etwa die gleiche Kontur aufweisen, so dass eine unterschiedliche Reaktion auf die einzelnen Vorprodukte entbehrlich sein kann.

Die Formeinrichtung weist bevorzugt einen Druckstempel auf, der über die bekannten Verfahren gegen das Vorprodukt anstellbar ist. Hierbei kann insbesondere ein Presszylinder zum Einsatz kommen, der über Servotechnik betrieben werden kann. Selbstverständlich können auch hydraulische oder mechanische Pressvorrichtungen verwendet werden, im letztgenannten Fall kann beispielsweise über Exzenterscheiben, ähnlich einer Nockenwelle, die weggesteuerte Absenkung des Druckstempels erfolgen, wobei eine federnde Lagerung, auch über pneumatische oder hydraulische Mittel manipulierbar, die druckgeregelte Funktion des Druckstempels auch im Falle des mechanischen Antriebs ermöglicht.

Die durch das erfindungsgemäße Verfahren hergestellten, geformten Lebensmittel werden anschließend von dem Widerlager bzw. aus dem Formnest entnommen. Sie können dann weiterverarbeitet werden, insbesondere können sie einem Garprozess oder einer sonstigen Zubereitung unterzogen werden. Auch ein anschließendes Tiefgefrieren zum Zwischenlagern oder zum direkten Verkauf an den Endkonsumenten ist natürlich möglich.

Weitere Merkmale und Vorteile der Erfindung ergeben sich aus den Unteransprüchen.

## Patentansprüche

1. Verfahren zur Herstellung geformter Lebensmittelprodukte bei dem aus einem oder mehreren, insbesondere fleisch-, fisch-, wild-, -geflügel, kohlehydratund/oder gemüsehaltigen Lebensmitteln oder einer Kombination und/oder einem hieraus zusammengefassten Gemisch ein gefrorenes Vorprodukt hergestellt wird, und das Vorprodukt im Rahmen der Verarbeitung innerhalb in einer Verarbeitungslinie über zumindest einen Formvorgang zu dem Lebensmittelprodukt mit gewünschter Kontur geformt wird, wobei innerhalb des Formvorgangs wenigstens ein Druckstempel das Vorprodukt zur Herstellung der Kontur gegen ein ebenes oder konturiertes Widerlager presst, **dadurch gekennzeichnet, dass** der Druckstempel die Druckkraft mit zumindest zwei, über einen Zwischenschritt oder eine Pause zeitlich voneinander getrennten Teilpressschritten aufbringt, wobei in einem ersten Teilpressschritt das Vorprodukt vorgeformt und in einem zweiten Teilpressschritt das Vorprodukt durch Erhöhung des Pressdruckes und/oder durch weiteres Anstellen des Druckstempels in Richtung des Widerlagers weiter geformt wird.

2. Verfahren zur Herstellung geformter Lebensmittelprodukte nach Anspruch 1, **dadurch gekennzeichnet, dass** die Dauer der Teilpressschritte zwischen 0,1s und 60s, bevorzugt zwischen 0,5s und 2s beträgt, wobei die Verformungsgeschwindigkeit oder der Verformungsgrad des Vorproduktes gemessen und bei einer hohen Verformungsgeschwindigkeit oder einem hohen Verformungsgrad der Teilpressschritt vorzeitig beendet oder die Länge des Teilpressschrittes, insbesondere auf 0,5s bis 1s verkürzt wird.

3. Verfahren zur Herstellung geformter Lebensmittelprodukte nach einem der beiden vorhergehenden Ansprüche, **dadurch gekennzeichnet, dass** zumindest einer der Teilpressschritte als spontan formender Pressschritt ausgebildet ist, wobei innerhalb dieses spontan formenden Pressschritts die Druckkraft auf den maximalen Teilpressdruck oder der Verformungsweg auf die maximale Teilverformung spontan erhöht wird und dieser Zustand während der restlichen Dauer des jeweiligen Teilpressschritts gehalten wird.

4. Verfahren zur Herstellung geformter Lebensmittelprodukte nach einem der vorhergehenden Ansprüche, **dadurch gekennzeichnet, dass** mehrere Teilpressschritte vorgesehen sind, wobei zumindest zwischen zwei einzelnen Teilpressschritten in der Phase zwischen den Teilpressschritten die Druckkraft zeitweise während der gesamten Phase oder während eines Teils der Phase einmal oder mehrmals mit zwischenzeitlicher Zwischenerhöhung bis auf den Anfangsdruck der Phase wieder reduziert wird.

5. Verfahren zur Herstellung geformter Lebensmittelprodukte nach einem der vorhergehenden Ansprüche, **dadurch gekennzeichnet, dass** zumindest einer der Teilpressschritte eine weggesteuerte Formphase und wenigstens eine, davor und/oder dahinter durchgeführte druckgesteuerte Formphase aufweist, wobei während der weggesteuerten Formphase der Druckstempel mit einer kontinuierlichen oder zeitlich veränderlichen, aber im Vorfeld festgelegten Geschwindigkeit und während der druckgesteuerten Formphase der Druckstempel mit einem kontinuierlichen oder zeitlich veränderlichen, aber im Vorfeld festgelegten Druckverlauf gegen die Widerlagerfläche angestellt wird.

6. Verfahren zur Herstellung geformter Lebensmittelprodukte nach einem der vorhergehenden Ansprüche, **dadurch gekennzeichnet, dass** der Druckstempel mit seiner Anlagefläche und/oder das Widerlager zumindest in Querrichtung zur Druckkraft derart elastisch ausgebildet ist, dass der Druckstempel und/oder das Widerlager auf lokal erhöhte Belastungen durch Auswandern der Druckfläche reagieren kann.

7. Verfahren zur Herstellung geformter Lebensmittelprodukte nach einem der Ansprüche 1 bis 5, **dadurch gekennzeichnet, dass** ein Druckstempel verwendet wird, der eine Mehrzahl von einzelnen, nebeneinander angeordneten und eine Gesamtdruckfläche des Druckstempels bildenden Druckelementen aufweist, die einzeln ansteuerbar sind und deren dem Druck entgegen gerichtete Reaktionskraft über eine Sensorik messbar ist, wobei zu Beginn eines Teilpressschrittes alle Druckelemente gleichmäßig an das Widerlager angestellt werden und bei Auftreten von Widerlagerdrücken infolge der Anlage eines Druckstempels an dem betroffenen Teil des Vorproduktes die Druckkraft für diesen Druckstempel zumindest zeitweise zum Erzeugen einer Vorverformung der erhabenen Bereiche erhöht wird.

8. Verfahren zur Herstellung geformter Lebensmittelprodukte nach einem der Ansprüche 1 bis 5, **dadurch gekennzeichnet, dass** ein Druckstempel verwendet wird, der eine Druckfläche und eine mit dem Vorprodukt in Kontakt kommende Wirkfläche aufweist, wobei die Druckfläche und die Wirkfläche über eine oder mehrere Federn mit einander derart verbunden sind, dass die Wirkfläche in Druckrichtung zurückfedern kann, so dass bei Anstellen des Druckstempels an das Vorprodukt zunächst die Wirkfläche gegen die Federkraft zurückgestellt wird und erst bei Federanschlag die volle Druckkraft auf das Vorprodukt wirkt.

9. Verfahren zur Herstellung geformter Lebensmittelprodukte nach einem der vorhergehenden Ansprüche, **dadurch gekennzeichnet, dass** ein Widerlager verwendet wird, das in Druckrichtung elastisch ausgebildet ist, insbesondere von einer elastischen Unterlage gebildet ist.

10. Verfahren zur Herstellung geformter Lebensmittelprodukte nach einem der vor hergehenden Ansprüche, **dadurch gekennzeichnet, dass** zumindest während eines Teils einer der Teilpressschritte oder während des gesamten Teilprozessschrittes der Druckstempel mit konstanter Druckkraft gegen das Widerlagen angestellt wird, wobei der Grad der Verformung über die zeitliche Dauer der Verfahrung des Druckstempels erzielt wird.

11. Verfahren zur Herstellung geformter Lebensmittelprodukte nach einem der vorhergehenden Ansprüche, **dadurch gekennzeichnet, dass** der Druckstempel und/oder das Widerlager derart ausgebildet sind, dass sie in zumindest einer Richtung, die rechtwinklig zur Druckrichtung verläuft, kleine Schwingungen ausführen und so das Vorprodukt unter leichter Massagebewegung gepresst wird.

12. Verfahren zur Herstellung geformter Lebensmittelprodukte nach einem der vorhergehenden Ansprüche, **dadurch gekennzeichnet, dass** der Druckstempel eine zum Widerlager nicht parallele Druckfläche aufweist und zwischen den einzelnen Teilprozessschritten gedreht wird, insbesondere um einen Winkel gedreht wird, der sich aus der Division von 360° durch die Anzahl der pro Vorprodukt angewendeten Teilprozessschritte ergibt.

13. Verfahren zur Herstellung geformter Lebensmittelprodukte nach einem der beiden vorhergehenden Ansprüche, **dadurch gekennzeichnet, dass** während einer Relaxierungsphase der Druckstempel einen gleich bleibenden oder reduzierten Druck ausübt und das Vorprodukt durch eine taumelnde und/oder kreisende Bewegung des Druckstempels und/oder des Widerlagers um eine zur Druckrichtung parallele Achse massiert wird.

## Claims

1. A method for manufacturing molded food products in which a frozen intermediate product is fabricated out of one or more, in particular meat, fish, game, poultry, carbohydrate and/or vegetable-containing foods or a combination and/or a mixture composed hereof, and the intermediate product is molded into a food product with the desired contour while being processed within a processing line in at least one molding operation, wherein at least one plunger presses the intermediate product against a flat or contoured thrust bearing for manufacturing the contour during the molding operation, **characterized in that** the plunger applies the compressive force with at least two partial pressing steps chronologically separated by an intermediate step or pause, wherein the intermediate product is pre-molded in a first partial pressing step, and the intermediate product is further molded in a second partial pressing step by increasing the applied pressure and/or further setting the plunger in the direction of the thrust bearing.

2. The method for manufacturing olded food products according to claim 1, **characterized in that** the duration of the partial pressing steps measures between 0.1 s and 60 s, preferably between 0.5 s and 2 s, wherein the deformation rate or deformation level of the intermediate product is measured, and the partial pressing step is prematurely ended given a high deformation rate or a high deformation level, or the length of the partial pressing step is shortened, in particular to 0.5 s to 1 s.

3. The method for manufacturing molded food products according to one of the two preceding claims, **characterized in that** at least one of the partial pressing steps is designed as a spontaneously molding pressing step, wherein the compressive force is spontaneously increased to the maximum partial applied pressure or the deformation path is spontaneously increased to the maximum partial deformation during this spontaneously molding pressing step, and this state is sustained for the remaining duration of the respective partial pressing step.

4. The method for manufacturing molded food products according to one of the preceding claims, **characterized in that** several partial pressing steps are provided, wherein, at least between two individual partial pressing steps, the compressive force is intermittently again reduced once or several times to the initial pressure of the phase with interim temporary increases in the phase between the partial pressing steps, either during the entire phase or during a part of the phase.

5. The method for manufacturing molded food products according to one of the preceding claims, **characterized in that** at least one of the partial pressing steps exhibits a path-controlled molding phase and at least one pressure-controlled molding phase performed before and/or after the latter, wherein the plunger is set against the thrust bearing surface at a rate that is continuous or chronologically variable, but determined in advance, during the path-controlled molding phase, and at a pressure sequence that is continuous or chronologically variable, but determined in advance, during the pressure-controlled molding phase.

6. The method for manufacturing molded food products according to one of the preceding claims, **characterized in that** the contact surface of the plunger and/or the thrust bearing is elastically designed at least on the transverse direction to the compressive force in such a way that the plunger and/or thrust bearing can react to locally elevated loads caused by migration of the thrust face.

7. The method for manufacturing molded food products according to one of claims 1 to 5, **characterized in that** use is made of a plunger exhibiting a plurality of individual pressure elements that are arranged side by side and form an overall thrust face of the plunger, which can be individually actuated, and whose reactive force directed against the pressure can be measured by means of a sensor system, wherein all pressure elements are uniformly set against the thrust bearing at the beginning of a partial pressing step, and, in the event of thrust bearing pressures that arise as the result of setting a plunger against the affected part of the intermediate product, the compressive force for this plunger is at least intermittently elevated to generate a preliminary deformation of the raised areas.

8. The method for manufacturing molded food products according to one of claims 1 to 5, **characterized in that** use is made of a plunger having a thrust face and an active surface that comes into contact with the intermediate product, wherein the thrust face and active surface are connected with each other by one or more springs in such a way that the active surface can rebound in the direction of pressure, so that, when the plunger is set against the intermediate product, the active surface is first reset against the spring force, and the complete compressive force only acts on the intermediate product given a spring stop.

9. The method for manufacturing molded food products according to one of the preceding claims, **characterized in that** use is made of a thrust bearing with an elastic design in the direction of pressure, in particular being comprised of an elastic support.

10. The method for manufacturing molded food products according to one of the preceding claims, **characterized in that** the plunger is set against the thrust bearing with a constant compressive force at least during part of the partial pressing step or during the entire partial pressing step, wherein the level of deformation is achieved over the chronological duration of plunger travel.

11. The method for manufacturing molded food products according to one of the preceding claims, **characterized in that** the plunger and/or thrust bearing is designed in such a way that it executes small oscillations at least in a direction running perpendicular to the direction of pressure, and thereby presses the intermediate product with a slight kneading motion.

12. The method for manufacturing molded food products according to one of the preceding claims, **characterized in that** the plunger exhibits a thrust face not parallel to the thrust bearing, and is turned between the individual partial procedural steps, in particular by an angle calculated from dividing 360° by the number of partial procedural steps used per intermediate product.

13. The method for manufacturing molded food products according to one of the two preceding claims, **characterized in that**, during a relaxation phase, the plunger exerts a constant or reduced pressure, and the intermediate product is kneaded by a tumbling and/or circulating motion of the plunger and/or thrust bearing around an axis parallel to the direction of pressure.

## Revendications

1. Procédé de production de produits alimentaires moulés, lors duquel à partir d'un ou de plusieurs produits alimentaires contenant notamment de la viande, du poisson, du gibier, de la volaille, des hydrates de carbone et/ou des légumes ou d'une association ou d'un mélange composé de ces derniers, on produit un produit semi-fini congelé et on moule le produit semi-fini dans le cadre de la mise en oeuvre dans une ligne de traitement par l'intermédiaire d'au moins un processus de moulage pour obtenir le produit alimentaire à contour souhaité, au sein du processus de moulage, pour créer le contour, au moins un poinçon de pressage pressant le produit semi-fini contre une culée plane ou profilée, **caractérisé en ce que** le poinçon applique la force de pression en au moins deux étapes de pressage partiel, séparées dans le temps par une étape intermédiaire ou par une pause, dans une première étape de pressage partiel, le produit semi-fini étant prémoulé et dans une deuxième étape de pressage partiel, le produit semi-fini étant moulé ultérieurement, par augmentation de la force de pression et/ou par mise en prise supplémentaire du poinçon en direction de la culée.

2. Procédé de production de produits alimentaires moulés selon la revendication 1, **caractérisé en ce que** la durée des étapes de pressage partiel est comprise entre 0,1 secondes et 60 secondes, de préférence entre 0,5 secondes et 2 secondes, la vitesse de déformation ou le niveau de déformation du produit semi-fini étant mesuré(e) et à une vitesse de déformation élevée ou un niveau de déformation élevé de l'étape de pressage partiel, étant prématurément achevée ou la longueur des étapes de pressage partiel étant raccourcie, notamment à de 0,5 secondes à 1 seconde.

3. Procédé de production de produits alimentaires moulés selon l'une quelconque des deux revendications précédentes, **caractérisé en ce qu'**au moins l'une des deux étapes de pressage partiel est conçue en tant qu'étape de pressage à moulage spontané, au sein de ladite étape de pressage à moulage spontané, la force de pressage étant augmentée spontanément à la pression de pressage partiel maximale ou la course de déformation étant spontanément augmentée à la déformation maximale et cet état étant maintenu pendant la durée restante de l'étape de pressage partiel concernée.

4. Procédé de production de produits alimentaires moulés selon l'une quelconque des revendications précédentes, **caractérisé en ce que** plusieurs étapes de pressage partiel sont prévues, au moins entre deux étapes individuelles de pressage partiel, dans la phase entre les étapes de pressage partiel, la force de pression étant de nouveau réduite temporairement pendant toute la phase ou pendant une partie de la phase, une ou plusieurs fois avec augmentation intermédiaire à intervalles jusqu'à la pression initiale de la phase.

5. Procédé de production de produits alimentaires moulés selon l'une quelconque des revendications précédentes, **caractérisé en ce qu'**au moins l'une des étapes de pressage partiel comporte une phase de moulage à course contrôlée et au moins une phase de moulage à pression contrôlée, réalisée avant et/ou après, pendant la phase de moulage à course contrôlée, le poinçon étant mis en prise contre la surface de culée à une vitesse continue ou temporairement variable, mais préalablement fixée et pendant la phase à pression contrôlée, le poinçon étant mis en prise contre la surface de culée avec une courbe de pression continue ou temporairement variable, mais préalablement fixée.

6. Procédé de production de produits alimentaires moulés selon l'une quelconque des revendications précédentes, **caractérisé en ce que** le poinçon est conçu de manière élastique avec sa surface d'appui et/ou au moins en direction transversale par rapport à la force de pressage et/ou la culée est conçue de manière élastique de telle sorte que le poinçon et/ou la culée puisse réagir par dérive de la surface de pressage à des contraintes localement élevées.

7. Procédé de production de produits alimentaires moulés selon l'une quelconque des revendications 1 à 5, **caractérisé en ce qu'**on utilise un poinçon qui comporte une pluralité d'élément de pressage, disposés côte à côte et formant une surface de pressage globale du poinçon, qui sont amorçables individuellement et dont la force de réaction orientée à l'encontre du pressage est mesurable par des capteurs, alors qu'au début d'une étape de pressage partiel, on met en prise tous les éléments de pressage de manière régulière contre la culée et en cas d'apparition de pressions sur la culée du fait de la mise en prise d'un poinçon, sur la partie en question du produit semi-fini, on augmente au moins temporairement la force de pressage pour ledit poinçon, pour créer une prédéformation des zones en relief .

8. Procédé de production de produits alimentaires moulés selon l'une quelconque des revendications 1 à 5, **caractérisé en ce qu'**on utilise un poinçon qui comporte une surface de pressage et une surface active entrant en contact avec le produit semi-fini, la surface de pressage et la surface active étant reliées l'une à l'autre par l'intermédiaire d'un ou de plusieurs ressorts, de telle sorte que la surface active puisse se détendre en direction de pressage, de sorte que lors de la mise en prise du poinçon sur le produit semi-fini, d'abord la surface active se détende à l'encontre de la force du ressort et seulement après la butée du ressort, la pleine force de pressage agisse sur le produit semi-fini.

9. Procédé de production de produits alimentaires moulés selon l'une quelconque des revendications précédentes, **caractérisé en ce qu'**on utilise une culée qui est conçue de manière élastique en direction de pressage, notamment qui est formée par une base élastique.

10. Procédé de production de produits alimentaires moulés selon l'une quelconque des revendications précédentes, **caractérisé en ce qu'**au moins pendant une partie des étapes de pressage partiel ou pendant la globalité de l'étape de pressage partiel, on met en prise le poinçon contre la culée avec une force de pressage constante, le niveau de la déformation étant obtenu sur la durée temporaire du déplacement du poinçon.

11. Procédé de production de produits alimentaires moulés selon l'une quelconque des revendications précédentes, **caractérisé en ce que** le poinçon et/ou la culée sont conçus de telle sorte qu'ils exercent de petites oscillations au moins dans une direction qui s'étend à la perpendiculaire de la direction de pressage et que de ce fait, le produit semi-fini soit pressé sous léger mouvement de massage.

12. Procédé de production de produits alimentaires moulés selon l'une quelconque des revendications précédentes, **caractérisé en ce que** le poinçon comporte une surface de pressage non parallèle à la culée et **en ce qu'**on le fait tourner entre les étapes partielles individuelles du processus, notamment on le fait tourner d'un angle résultant de la division de 360 ° par le nombre des étapes partielles de processus utilisées par produit semi-fini.

13. Procédé de production de produits alimentaires moulés selon l'une quelconque des revendications précédentes, **caractérisé en ce que** pendant une phase de relaxation, le poinçon exerce une pression invariable ou réduite et **en ce que** par un mouvement chancelant et/ou circulaire du poinçon et/ou de la culée, on masse le produit semi-fini autour d'un axe parallèle à la direction de pressage.
